# EUROPEAN PATENT APPLICATION

(11) **EP 4 819 603 A1**
(43) Date of publication of application: **07.10.2026**
(21) Application number: 25305468.8
(22) Date of filing: 31.03.2025
(51) Int. Cl.: H04N 19/127, H04N 19/156, H04N 19/157, H04N 19/174

(54) **CODING TOOL BUDGETS FOR DECODER SIMPLIFICATIONS**

(71) Applicant: InterDigital CE Patent Holdings, SAS, 75017 Paris (FR)
(72) Inventor: REUZE, Kevin, 35700 RENNES (FR); NASER, Karam, 35250 MOUAZE (FR); GALPIN, Franck, 35235 THORIGNE-FOUILLARD (FR); POIRIER, Tangi, 35235 THORIGNE-FOUILLARD (FR)
(74) Representative: Interdigital

(57) **Abstract**

A method of video decoding is disclosed. For a zone of a frame, at least one budget of use of at least one coding tool is obtained. A current block of the zone of the frame is decoded using the at least one coding tool. A value is added to at least one counter associated with the at least one coding tool. The coding tool is deactivated for decoding a rest of the zone of the frame responsive to the counter being higher than the at least one budget of use.

## Description

### BACKGROUND

The present application is related to methods and apparatuses for video encoding and decoding.

### BRIEF SUMMARY

Briefly stated, in one embodiment, a method of video decoding is disclosed. For a zone of a frame, at least one budget of use of at least one coding tool is obtained. A current block of the zone of the frame is decoded using the at least one coding tool. A value is added to at least one counter associated with the at least one coding tool. The at least one coding tool is deactivated for decoding a rest of the zone of the frame responsive to the counter being higher than the at least one budget of use.

In another embodiment, A method of video encoding is disclosed. For a zone of a frame, at least one budget of use of at least one coding tool is obtained A current block of the zone of the frame is encoded using the at least one coding tool. A value is added to at least one counter associated with the at least one coding tool. The at least one coding tool is deactivated for encoding a rest of the zone of the frame responsive to the counter being higher than the at least one budget of use.

Corresponding apparatuses are also disclosed.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates examples of disallowed Ternary Tree (TT) and Binary Tree (BT) divisions; and
FIG. 5 is a block diagram illustrating an example video decoding method according to one or more embodiments of the present disclosure; and
FIG. 6 is a block diagram illustrating an example video encoding method according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

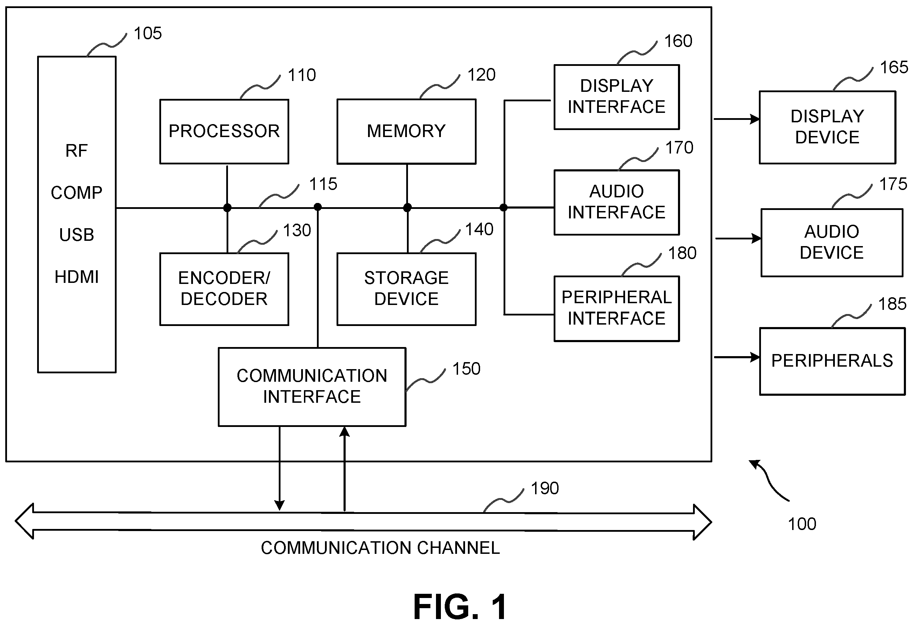

Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

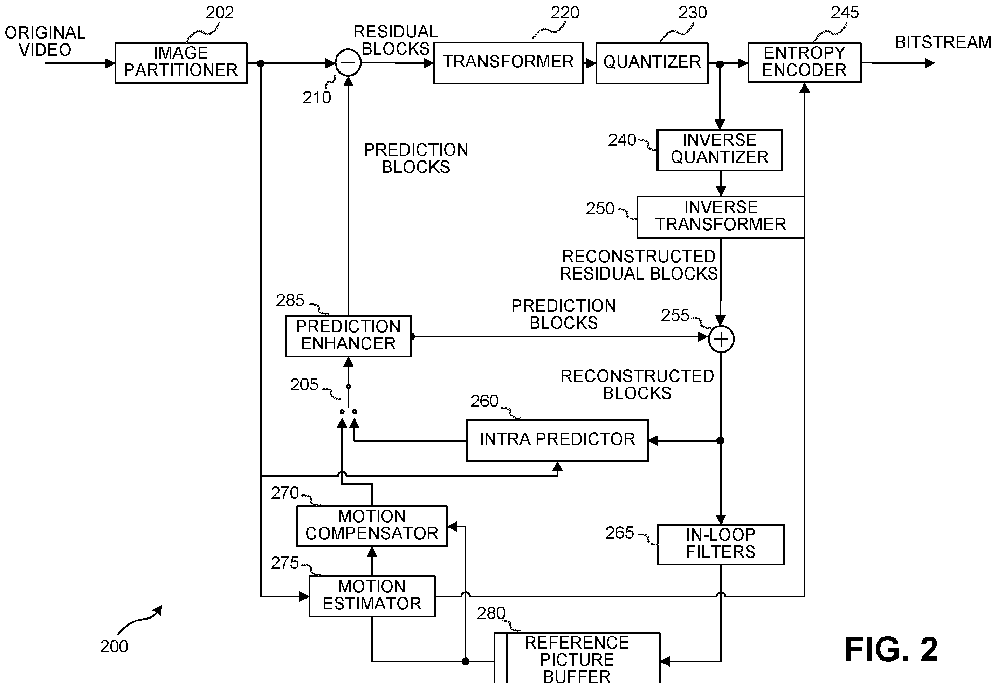

**FIG. 2** is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

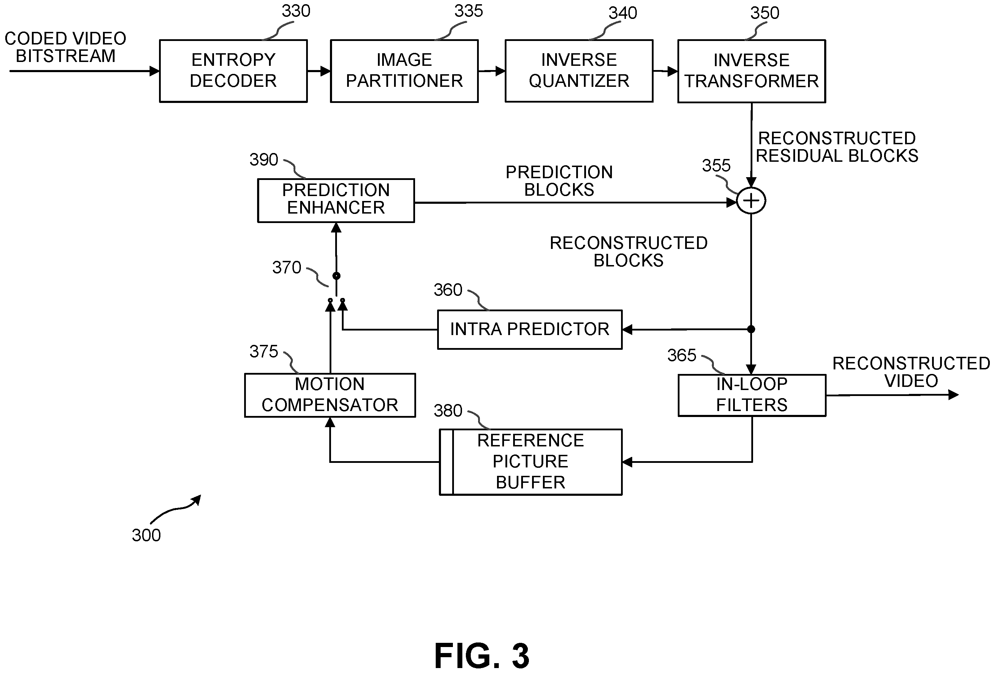

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

**FIG. 3** is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Intra prediction may be used to make predictions for blocks. An encoder may select an (e.g., the best) intra prediction mode (IPM), for example, in terms of rate-distortion. The encoder may signal an index (e.g., an index associated with the selected intra prediction mode) to the decoder. A decoder can use the signaled index to perform the same prediction for a (e.g., each) block performed by the encoder. Signaling the index of the selected intra prediction mode may add extra overhead, reducing the gain from intra prediction. The index of the intra prediction mode selected to predict a given block may be coded using a set of Most Probable Modes (MPMs), which may reduce the signaling overhead, for example, if the index of the selected intra prediction mode belongs to the list. Signaling an intra prediction mode index using a set of MPMs may be referred to as MPM list-based signaling. Video coding, e.g., using VVC and/or HEVC, may be implemented with MPM list-based signaling. In other video coding implementations (e.g., ECM) multiple (e.g., two) MPM lists (e.g., instead of one MPM list) may be implemented. Herein, the signaling of a mode index, such as MPM list-based signaling, may be referred to as the signaling of a mode.

Signaling overhead may be (e.g., additionally and/or alternatively) limited (e.g., by ECM) using one or more tools based on (e.g., derived from) decoded pixels surrounding a given block (e.g., in intra prediction mode) that may be used (e.g., are likely the best) for predicting the block (e.g., in terms of rate-distortion). A first coding tool may be Decoder-side Intra Mode Derivation (DIMD). A second coding tool may be Template-based Intra Mode Derivation (TIMD). Signaling overhead may be reduced, for example, using the first and/or second tool. Signaling the tool may enable a decoder to obtain the indices of the (e.g., likely best) intra prediction modes. In examples (e.g., using DIMD), a template of decoded pixels above and/or on the left side of a current block may be analyzed to deduce the directionalities of the template, from which one or more (e.g., two) directional intra prediction modes may be selected. A prediction signal may be generated, for example, by blending multiple (e.g., two) modes. In examples (e.g., using TIMD), several intra prediction modes may be tested on a template of decoded pixels above and/or on the left side of a current block. One or more (e.g., two) modes yielding the smallest Sum of Absolute Transform Differences (SATDs) between the template of reconstructed samples and the prediction of the template may be selected (e.g., retained or kept). A prediction signal of the current block may be generated, for example, by applying the mode with the smallest SATD or blending multiple (e.g., two) modes.

Some tools (e.g., DIMD or TIMD) may be hard to implement, either due to their high number computations to be done (e.g., SATD computations in case of TIMD) by the decoder and/or the latency they introduce. The various embodiments disclosed below are not limited to TIMD and DIMD coding tools and may be applied to other coding tools, e.g., to coding tools that have a worst-case complexity deemed too complex for implementation. Indeed, usually the worst-case complexity for a coding tool is computed based on the assumption that, if every block on the frame uses a worst-case scenario, the decoder does not have enough cycles to decode the frame before a next frame has to be decoded. For example, the worst-case complexity for bi-direction prediction is for a 4x4 block. Since it was deemed impossible to decode an image that would use exclusively 4x4 bi-prediction on the whole frame, 4x4 bi-prediction was excluded in VVC.

A decoding method (encoding method respectively) is thus proposed that reduces the decoding complexity (encoding complexity respectively) by limiting a number of uses of a coding tool per zone of a frame, or number of blocks, or number of pixels (e.g., number of CUs/fixed size zone of NxN/slice/ CTU/Virtual Pipeline Data Unit). In some embodiments, a maximum number of uses of a tool is thus introduced per zone of a frame. Said otherwise, it is thus proposed to allocate a form of budget for some (e.g., specific, complex) coding tools to ensure that they can still be used as much as possible to maximise the compression efficiency and that those coding tools still allow for a decodable stream.

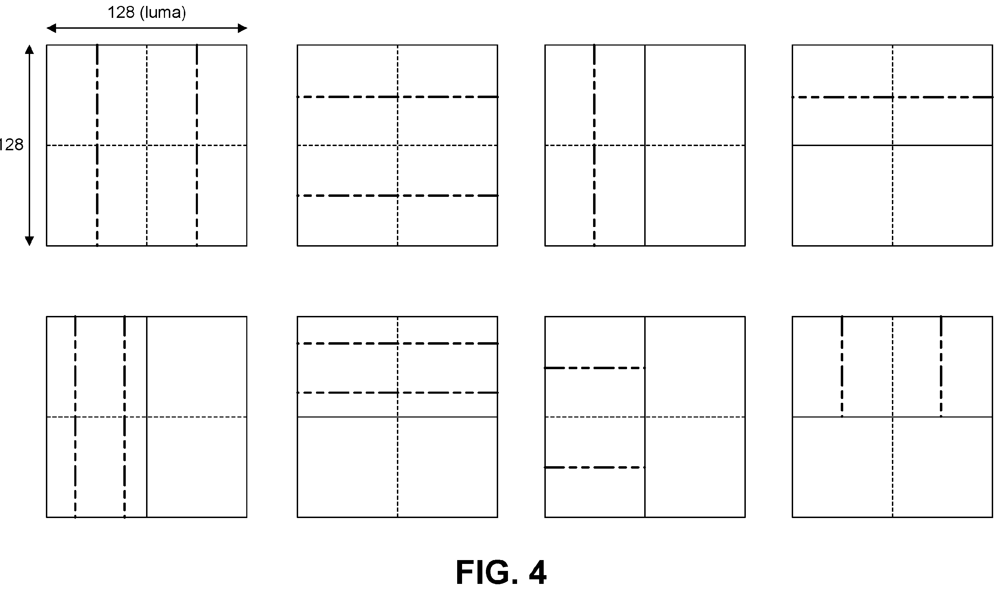

Virtual pipeline data units (VPDUs) are defined as non-overlapping units in a picture. In hardware decoders, successive VPDUs are processed by multiple pipeline stages at the same time. The VPDU size is roughly proportional to the buffer size in most pipeline stages, so it is important to keep the VPDU size small. In most hardware decoders, the VPDU size can be set to maximum transform block (TB) size. However, in VVC, ternary tree (TT) and binary tree (BT) partition may lead to the increasing of VPDUs size. In order to keep the VPDU size as 64x64 luma samples, the following partition restrictions (with syntax signaling modification) may be applied. TT (Ternary Tree) split is not allowed for a CU with either width or height, or both width and height equal to 128. For a 128xN CU with N ≤ 64 (i.e. width equal to 128 and height smaller than 128), horizontal BT (Binary Tree) is not allowed. For an Nx128 CU with N ≤ 64 (i.e. height equal to 128 and width smaller than 128), vertical BT is not allowed. **FIG. 4** illustrates examples of disallowed TT and BT divisions (partitionings).

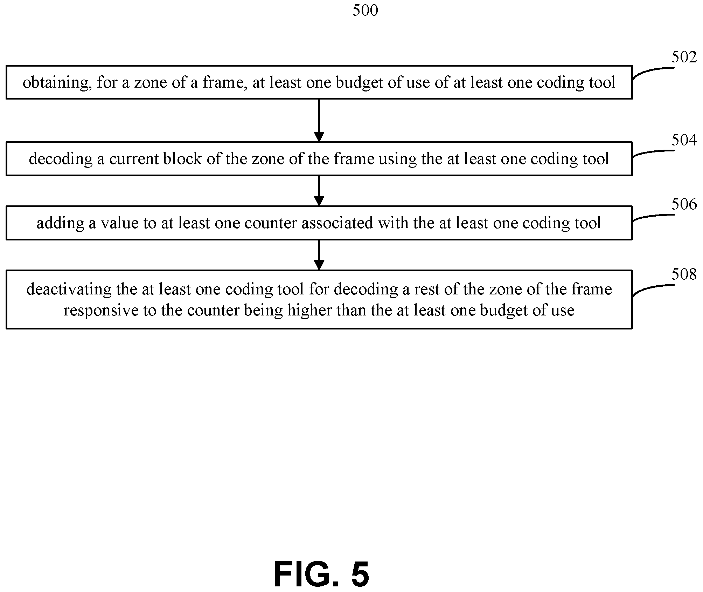

**FIG. 5** is a block diagram illustrating an example video decoding method (500) according to one or more embodiments of the present disclosure.

A (at least one) budget of use (e.g., a maximum budget of use) of at least one coding tool for a zone of a frame (e.g., for a VPDU) is obtained (502). The at least one budget of use may be a maximum number of uses of the coding tool, a maximum number of operations per pixel or a maximum number of memory access.

In an example, the budget of use is known by the decoder. In another example, the budget of use is decoded from high-level syntax, e.g., from a picture parameter set (PPS) or a sequence parameter set (SPS).

A current block of the zone of the frame is decoded (504) using the at least one coding tool. The coding tool is for example TIMD, DIMD, etc.

A value is added (506) to a counter associated with the coding tool, e.g., by an integer value such as 1. In an example, if/when the budget of use is a maximum number of operations, then the counter associated with the coding tool is increased by the number of operations associated with a use of the coding tool.

In some other examples, the value may be negative and thus the counter may be decreased.

The coding tool is deactivated (508) for decoding the rest (the remainder) of the zone of the frame responsive to the counter being higher than the budget of use.

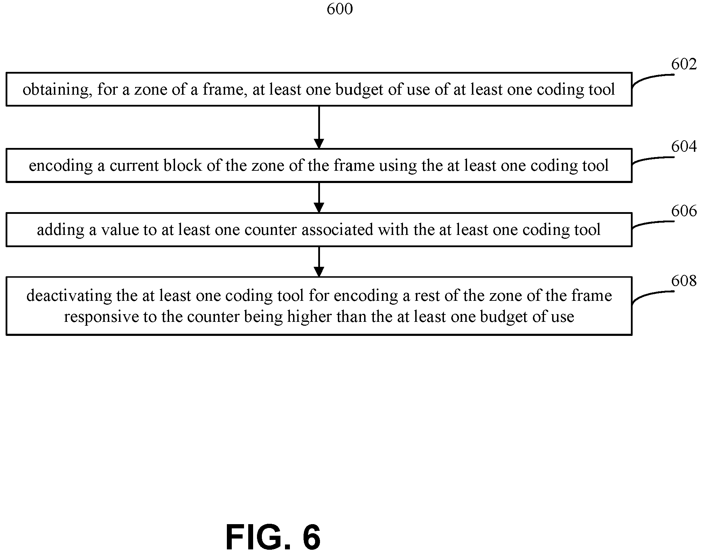

**FIG. 6** is a block diagram illustrating an example video encoding method (600) according to one or more embodiments of the present disclosure.

A (at least one) budget of use (e.g., a maximum budget of use) of at least one coding tool for a zone of a frame (e.g., for a VPDU) is obtained (602). The at least one budget of use may be a maximum number of uses of the coding tool, a maximum number of operations per pixel or a maximum number of memory access.

In an example, the budget of use is known by both the encoder and decoder in which case there is no need to transmit it. In another example, the budget of use may be further encoded in high-level syntax, e.g., from a picture parameter set (PPS) or a sequence parameter set (SPS).

A current block of the zone of the frame (e.g., for a VPDU) is encoded (604) using the at least one coding tool. The coding tool is for example TIMD, DIMD, etc.

A value is added (606) to a counter associated with the coding tool, e.g., by an integer value such as 1. In some other examples, the value may be negative and thus the counter may be decreased. The coding tool is deactivated (608) for encoding the rest (the remainder) of the zone of the frame responsive to the counter being higher than the budget of use.

The various embodiments described below may be applied by both the encoding and decoding methods 500 and 600 unless otherwise specified.

In the following examples, the budget of use is a maximum number of uses of a coding tool. However, the present principles are not limited to the maximum number of uses, and other budgets of use may be used instead of or in addition to the maximum number of uses, e.g., a maximum number of operations per pixel, a maximum number of memory access, etc.

In an example, a counter is associated with each coding tool for which the method 500 or 600 applies. For each zone, the coding tool is associated with a maximum number of uses that depends on the coding tool. The zone of the frame can refer to a CTU, a VPDU, a slice, a frame, or a fixed size number of samples such as 128x128 samples. VPDU is used in next examples.

In an example, the maximum number of uses associated with TIMD (*N_{TIMD}*) is set to four CUs inside each VPDU, i.e., *N_{TIMD}* = 4. If the maximum number of TIMD uses is reached before the end of the VPDU decoding (encoding respectively) then TIMD is not signalled anymore and, for decoding (encoding respectively) the rest of the VPDU, TIMD is deactivated, i.e., is treated as if it were de-activated by a configuration flag parameter.

In some variants, some coding tools may share a counter, e.g., if they have similar complexity issues. For example, in some variants, DIMD and TIMD share a counter as they both perform operations on a template area.

In some variants, a counter shared between different coding tools may be increased by different values (e.g., integer values) at 506 and 606 depending on the used coding tool. As an example, as TIMD is more complex than DIMD, using TIMD increases the counter by, for example, 4 while using DIMD increases the counter by, for example, 1.

If/when the counter reaches the maximum budget (i.e., maximum number of uses) of, for example, 18 then neither TIMD nor DIMD can be used for the rest (remainder) of the VPDU, and both their signaling may be removed. In this example, if the counter reaches, e.g., 16, TIMD can no longer be used as its use would go over the budget (i.e., maximum number of uses), but DIMD can still be used twice.

In some variants, using the coding tool for another purpose than prediction (e.g., TIMD or DIMD being used to create the MPM list) also increases their respective counter(s). Once the budget is reached (e.g., counter value reaches the maximum number of uses), those tools may not be used, neither for prediction nor for their secondary purpose (i.e., they are considered as fully disabled, as if they were disabled by, e.g., a PPS or SPS parameter).

In some variants, the integer values by which the different counters are increased may depend on the block size. For example, using TIMD on a block with fewer than 32 samples may increase the counter by 4 while using it on a bigger block only increases it by 1. Indeed, using TIMD on smaller blocks requires more operations per samples.

In a variant, the value of the (e.g., maximum) budget of use for a coding tool depends on a profile being used. In another variant, the value of the (e.g., maximum) budget of use for a coding tool may be transmitted by a configuration parameter, e.g., in a PPS or SPS. In some variants, another high-level syntax element (e.g., a flag) indicates the area for which the budget applies.

In some variants, in a case where a coding tool is used on a current block of a sufficiently large size (e.g., on a current block whose product of width by height is greater than 1024), the counter can be decreased (506, 606) instead of being increased, e.g., as it allows for a lower number of operations per samples.

In a variant, the counter is normalized by block size. In an example, the complexity is assessed as the minimal number of cycles needed to run the process. The number of cycles is itself assessed by the number of steps where computation can be done independently. In this variant, the counter is increased for each block depending on the tool and block size. Once the budget of use is reached, the complex tools are deactivated for the current area. Advantageously, the deactivation of the tool allows to remove the signaling associated with the activation/deactivation of the tool.

In some variants, a (e.g., single) coding tool can have different values to increment (decrement respectively) the counter. For example, in embodiments where TIMD uses a counter both when it is used to reorder the MPM list and as a prediction tool, the increment applied when using TIMD to reorder the MPM list may be smaller than the one used when TIMD is used as a prediction tool, as more operations are required in the latter.

In some variants, multiple budgets may be tracked for different complexity prerogatives, i.e. for different metrics. For example, a budget can track the latency, another the memory usage (e.g., number of memory access), and another one the number of operations per sample (e.g., MAC per pixel). Using a coding tool can increment one or several budgets. In another example, a budget can encompass one or several tools. For example, a same budget and thus a same counter may be associated with a plurality of coding tools. In this case, the counter may be decremented (506, 606) when the coding tool used is of very low complexity while it may be increased (506, 606) when using more complex coding tools of the plurality of coding tools.

In a variant that applies on the encoder side only, a threshold for the gain of the tool is introduced. If the gain between the tool tested is under this threshold, the tool is not selected. The rationale is to not use the entirety of the budget for the tool at the very beginning of the VPDU, when better gains could be made by using the tool on later parts of the VPDU. This threshold can be compared to the ratio between the best mode found so far and the tool being tested.

In some variants this threshold may depend on configuration parameters. In some variants, this threshold may depend on a percentage of the VPDU that is already encoded/decoded (i.e., the threshold decreases as the encoder progresses through the VPDU, to disappear completely for the last part of the VPDU). In some variants, the threshold may be updated after each frame or each VPDU, to increase it if all the budget of a coding tool is used too often or decrease it if the budget of a tool is not fully used too often. In some variants, the threshold and/or its update rate are signalled through a PPS flag.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. **In** some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of video decoding comprising:
obtaining, for a zone of a frame, at least one budget of use of at least one coding tool;
decoding a current block of the zone of the frame using the at least one coding tool;
adding a value to at least one counter associated with the at least one coding tool; and
deactivating the at least one coding tool for decoding a rest of the zone of the frame responsive to the counter being higher than the at least one budget of use.

2. The method of claim 1, wherein the at least one budget of use is a number of uses, a number of operations, a latency value or a number of memory access.

3. The method of claim 1 or 2, wherein the zone of a frame belongs to a group comprising a coding tree unit, a virtual pipeline data unit, a slice, a frame, and a fixed size number of samples.

4. The method of any one of claims 1 to 3, wherein the counter is associated with at least a first coding tool and a second coding tool.

5. The method of claim 4, wherein the value for the first coding tool is different from the value for the second coding tool.

6. The method of any one of claims 1 to 5, wherein the value depends on block size.

7. The method of any one of claims 1 to 6, wherein obtaining, for a zone of a frame, at least one budget of use of at least one coding tool comprises obtaining a plurality of budgets of use each being associated with a different metric and wherein adding a value to at least one counter associated with the at least one coding tool comprises adding a value to a counter per metric.

8. The method of any one of claims 1 to 7, wherein obtaining, for a zone of a frame, at least one budget of use of at least one coding tool comprises decoding at least one budget of use from a picture parameter set or from a sequence parameter set.

9. A method of video encoding comprising:
obtaining, for a zone of a frame, at least one budget of use of at least one coding tool;
encoding a current block of the zone of the frame using the at least one coding tool;
adding a value to at least one counter associated with the at least one coding tool; and
deactivating the at least one coding tool for encoding a rest of the zone of the frame responsive to the counter being higher than the at least one budget of use.

10. The method of claim 9, wherein the at least one budget of use is a maximum number of uses, a maximum number of operations or a maximum number of memory access.

11. The method of claim 9 or 10, wherein the zone of the frame belongs to a group comprising a coding tree unit, a virtual pipeline data unit, a slice, a frame, or a fixed size number of samples.

12. The method of any one of claims 9 to 11, wherein the counter is associated with at least a first coding tool and a second coding tool.

13. The method of any one of claims 9 to 12, wherein obtaining, for a zone of a frame, at least one budget of use of at least one coding tool comprises obtaining a plurality of budgets of use each being associated with a different metric and wherein adding a value to at least one counter associated with the at least one coding tool comprises adding a value to a counter per metric.

14. The method of any one of claims 9 to 13, further comprising encoding the at least one budget of use in a picture parameter set or in a sequence parameter set.

15. A video decoding apparatus comprising one or more processors and at least one memory coupled to said one or more processors, wherein said one or more processors are configured to perform:
obtaining, for a zone of a frame, at least one budget of use of at least one coding tool;
decoding a current block of the zone of the frame using the at least one coding tool;
adding a value to at least one at least one counter associated with the at least one coding tool; and
deactivating the at least one coding tool for decoding a rest of the zone of the frame responsive to the counter being higher than the at least one budget of use.

16. A video encoding apparatus comprising one or more processors and at least one memory coupled to said one or more processors, wherein said one or more processors are configured to perform:
obtaining, for a zone of a frame, at least one budget of use of at least one coding tool;
encoding a current block of the zone of the frame using the at least one coding tool;
adding a value to at least one a counter associated with the at least one coding tool; and
deactivating the at least one coding tool for encoding a rest of the zone of the frame responsive to the counter being higher than the at least one budget of use.
